# EUROPÄISCHE PATENTSCHRIFT

(11) **EP 2 601 036 B1**
(45) Veröffentlichungstag und Bekanntmachung des Hinweises auf die Patenterteilung: **06.01.2016**
(21) Anmeldenummer: 11741546.3
(22) Anmeldetag: 21.07.2011
(51) Int. Cl.: B29C 47/68, B01D 29/96

(54) **SCHMUTZABSCHEIDER FÜR HOCHVISKOSE MEDIEN**
DIRT PRECIPITATOR FOR A HIGHLY VISCOUS MEDIUM
SÉPARATEUR D'IMPURETÉS POUR MILIEUX TRÈS VISQUEUX

(30) Priorität: 03.08.2010 DE 102010036810
(43) Veröffentlichungstag der Anmeldung: 12.06.2013
(73) Patentinhaber: Nordson Holdings S.à r.l. & Co. KG, 40699 Erkrath (DE)
(72) Erfinder: MIDDLER, Robert, 48329 Havixbeck (DE)
(74) Vertreter: Eisenführ Speiser
(86) Internationale Anmeldenummer: PCT/EP2011/062561
(87) Internationale Veröffentlichungsnummer: WO 2012/016846

(56) Entgegenhaltungen:
- WO-A1-2004/108393
- DE-A1- 4 040 024
- DE-A1- 4 212 928
- DE-A1- 10 151 496
- US-A- 5 407 586
- US-A- 5 516 426
- US-A1- 2008 179 261

## Beschreibung

Die Erfindung betrifft einen Schmutzabscheider für hochviskose Medien, mit den Merkmalen des Oberbegriffs des Anspruchs 1.

Um Verklumpungen und Fremdstoffe in einem hochviskosen Medium wie einer Kunststoffschmelze herauszufiltern, werden Siebe in den Fluidstrom geschaltet, die sich im Betrieb zunehmend zusetzen und ausgetauscht werden müssen. Um während des Austauschs oder der Reinigung der Siebe einen Produktionsbetrieb aufrecht erhalten zu können, sind unter anderem gattungsgemäße Schmutzabscheider mit einem Siebrad bekannt, auf welchem mehrere Siebstellen angeordnet sind, beispielsweise aus der EP 379 966 A2. Diese bestehen aus einem vorderen Gehäuseelement und einem hinteren Gehäuseelement, zwischen denen ein Siebrad angeordnet ist. Das Siebrad enthält eine Vielzahl von Sieböffnungen, also Durchbrechungen des scheibenförmigen Siebrades, die jeweils mit einem durchlässigen Siebelement ausgekleidet sind. In den Gehäuseelementen ist jeweils ein Zulauf- bzw. ein Ablaufkanal vorgesehen, wobei Zulauf- bzw. ein Ablaufkanal hintereinander liegen, insbesondere in Flucht, und nacheinander mit jeweils einer der Durchbrechungen im Siebrad einen durchgängigen Fließkanal ausbilden. Ist die aktuell durchströmte Siebstelle zu stark verschmutzt, wird das Siebrad um einen Winkel gedreht, so dass die nächstfolgende Siebstelle in den Fließkanal hineingeschwenkt wird. Mit dem weiteren Drehen des Siebrades, sei es schrittweise oder kontinuierlich, wird die verschmutzte Siebstelle in den Bereich einer Siebwechselöffnung im Gehäuse gebracht, an welcher die Siebstelle frei zugänglich ist. Dort kann das Siebelement herausgenommen und ausgetauscht werden kann.

Bei dem in EP 379 966 A2 beschriebenen Schmutzabscheider ist auch eine Rückspülfunktion offenbart, um Anlagerungen von der Schmutzseite des Siebes lösen zu können und so das Sieb ohne vollständige Entnahme aus der Sieböffnung reinigen zu können. Dazu wird an der Gehäuserückseite Schmelze aus dem Fließkanal abgezweigt und von der Reinsiebseite durch die Siebstelle zurückgeführt. An dem Siebelement anhaftende Partikel können somit durch den von hinten anstehenden Staudruck gelöst und nach außerhalb des Gehäuses herausgespült werden. Die Rückspülöffnung, welche die Verbindung zur Außenseite des Gehäuses herstellt, kann mit einem beweglichen Schieber verschlossen werden.

Nachteilig bei dem bekannten gattungsgemäßen Schmutzabscheider ist, dass jeweils nur wenige Siebstellen in Funktion sind und innerhalb eines durchgängigen Fließkanals stehen, während die über das Siebrad verteilten anderen Siebstellen, die noch mit dem Medium gefüllt sind, ungenutzt verharren, wodurch der Durchsatz auf den Fließkanalquerschnitt der gerade in Produktion befindlichen Siebposition begrenzt ist.

Um einen größeren Durchsatz zu ermöglichen, werden Siebelemente vorgesehen, die deutlich größer sind als der Öffnungsquerschnitt der Zu- und Ablaufkanäle, so dass trichterartige Übergänge vorgesehen sein müssen. Dies führt dazu, dass der Fluidstrom in den äußeren Bereichen eines Strömungskanals größere Wege zurücklegen muss als im Zentrum. Die Folge ist ein inhomogenes Fluid-Verweilzeit-Spektrum im Bereich der Siebstelle.

Zudem besteht die Gefahr, dass während der langen Zeitdauer von dem Ausfahren einer Siebstelle aus dem Fließkanal bis zum erneuten Einfahren dort hinein eine Materialzersetzung eintritt. Dies ist gerade bei Kunststoffschmelzen eine Gefahr, bei denen das in der Durchbrechung im Siebrad befindliche Kunststoffmaterial über eine längere Zeit in dem beheizten Gehäuse gehalten wird, wodurch es zu Verkohlungen kommen kann. Dies beeinträchtigt die Qualität der gefilterten Schmelze.

Der Vorteil der mit einem Siebrad ausgerüsteten Schmutzabscheider gegenüber anderen bewährten Bauarten besteht in einer einfachen und kostengünstigen Bauweise. Anders als bei den an sich sehr zuverlässig arbeitenden und bewährten Siebbolzenwechslern müssen bei einem Schmutzabscheider mit einem Siebrad nicht ein Zylinder und eine Bohrung genau mit einer Passung aufeinander abgestimmt werden, sondern es reicht bei den Siebrad-Schmutzabscheidern, die Berührungsflächen zwischen den Gehäuseelementen und den Siebrad-Dichtflächen plan zu schleifen. Die beiden Gehäuseelemente werden dann mit dem dazwischen liegenden Siebrad gegeneinander verspannt. Durch die Flächenberührung der Stirnflächen der Siebräder mit den Gehäuseflächen wird eine gute Dichtigkeit erzielt. Ein Schmutzabscheider nach dem Oberbegriff wird in der US 55 16 426 offenbart.

Aufgabe der vorliegenden Erfindung ist es, bei einem Schmutzabscheider mit einem Siebrad der eingangs genannten Art den Durchsatz zu erhöhen und insbesondere die Gefahr einer Materialzersetzung an den nicht in Produktionsstellung befindlichen Siebstellen zu vermindern.

Gelöst wird diese Aufgabe durch einen Schmutzabscheider mit den Merkmalen des Anspruchs 1.

Der Begriff "Siebposition" wird für diejenigen Stellen benutzt, an denen im Gehäuse Zu- und Ablauf(teil)kanäle in Flucht hintereinander liegen und sich eine Sieböffnung im Siebrad zwischen ihnen befindet.

Das Merkmal, dass der Zulaufkanal, der Ablaufkanal und die Sieböffnung in wenigstens einer Arbeitsposition "hintereinander liegen", bedingt nicht zwingend längliche geometrische Körper mit exakt fluchtenden Mittelachsen, sondern es bedeutet lediglich, dass sich in einer Arbeitsposition die lichten Querschnitte der Mündungen von Zu- und Ablaufkanälen und der Sieböffnung wenigstens teilweise überlappen, so dass ein Durchfluss ermöglicht ist.

"Sieböffnung" hingegen bezeichnet die konkrete Durchbrechung im Siebrad, die mit einem Siebelement verschlossen ist und zusammen mit diesem eine "Siebstelle" bildet, welche ihre Position mit der Drehung des Siebrades fortlaufend verändert.

"Ringzone" bezeichnet eine in Durchströmungsrichtung projizierte Ringfläche am Siebrad und den angrenzenden Flächen der Gehäuseelemente. In der Ringzone sind die Sieböffnungen wie auch die Mündungen der Zu- und Ablaufkanäle angeordnet. Die Sieböffnungen können innerhalb der Ringzone auf einem gemeinsamen, einheitlichen Teilkreis angeordnet sein, aber auch auf mehreren, zueinander beabstandeten Teilkreisen. Während im Stand der Technik nach Art eines Revolvers immer nur einige oder wenige Siebstellen - d.h. maximal 35 - 40% der auf dem Siebrad verfügbaren Siebstellen - in den Fließkanal hinein gefahren werden und aus diesem wieder heraus, wenn sie verschmutzt sind, geht die Erfindung bewusst den anderen Weg und gibt die Mehrzahl der Siebstellen in den Produktionsbetrieb, wobei weniger als die Hälfte der Siebstellen, insbesondere sogar nur ein Viertel oder noch weniger, nicht in der Produktion sind und gereinigt oder ausgetauscht werden können.

Mit der gleichzeitigen Beaufschlagung der Mehrzahl der Sieböffnungen am Siebrad wird die wirksame Filterfläche deutlich erhöht. Dabei können die Sieböffnungen so gestaltet sein, dass sie sich weitgehend in den Querschnitt des Zu- und Ablaufs einfügen, wodurch sich günstigere Strömungsverhältnisse ergeben als bei bekannten gattungsgemäßen Siebvorrichtungen, bei denen an den Sieböffnungen teilweise erhebliche Aufweitungen vorgesehen sind, um eine größere Filterfläche zur Verfügung stellen zu können.

Der besondere Effekt des Konstruktionsprinzips nach der Erfindung liegt aber überraschenderweise darin, dass es bei hochviskosen Medien zu einer Selbstnivellierung der Strömungswege kommt.

Bei den einzelnen Sieböffnungen, die von wenigstens einem Zulaufkanal angeströmt werden und von welchen wenigstens ein Ablaufkanal wegführt, stellen sich mit zunehmender Betriebszeit gleichartige Strömungsverhältnisse unabhängig davon ein, wie die Fließwege zu den einzelnen Sieböffnungen ausgestaltet sind.

Sieht man beispielsweise einen Fließkanal vor, der sich ausgehend von der Zulauföffnung als Bogen oder Polygonzug von einer Sieböffnung zur nächsten erstreckt und sieht man hinsichtlich des Querschnitts der Sieböffnung und der Feinheit der eingesetzten Siebe gleichartige konstruktive Bedingungen vor, dann werden diejenigen Siebstellen, die näher zur Zulauföffnung liegen, anfangs stärker durchströmt als andere, welcher weiter entfernt im Strömungspfad liegen. Mit dem größerem Volumenstrom verschmutzen jedoch die Siebe in den anfangs stärker durchströmten Sieböffnungen auch schneller. Infolgedessen steigt der Strömungswiderstand dort an und der Volumenstrom nimmt lokal ab. Relativ dazu erhöht sich - konstante Verhältnisse bei Zu- und Ablauföffnung vorausgesetzt - der Durchsatz an den entfernter liegenden Siebstellen, die zunächst weniger verschmutzt worden sind und entsprechend einen relativ geringeren Strömungswiderstand bieten. Die Folge ist, dass sich selbsttätig ein weitgehendes Gleichgewicht zwischen den Teilströmungen durch die einzelnen Siebstellen einstellt, solange nicht Teilströmungen völlig versiegen. Um dem entgegen zu wirken, werden dann mit dem Drehen des Siebrads einzelne Sieböffnungen in eine Wartungsstellung gebracht, wo sie gereinigt oder ausgetauscht werden können.

Die Änderung der Position der Siebstellen in Bezug auf Zu- und Ablaufkanäle aufgrund der Rotation des Siebrads kann ebenfalls dazu beitragen, dass sich über einen längeren Produktionszeitraum gesehen gleichartige Strömungsverhältnisse an allen Sieböffnungen einstellen.

Entsprechend dem vorstehend beschriebenen Effekt einer Selbstnivellierung können der Zulaufkanal und/oder der Ablaufkanal zentral, also im Bereich der Mittelachse des Siebrads, angeordnet sein, aber auch dezentral, also außerhalb des Bereich der Mittelachse des Siebrads.

Die zentrale Anordnung ist konstruktiv aufwändiger, sofern eine Lagerung des Siebrads im Gehäuse über eine Achse oder Welle im Zentrum vorgesehen ist, da dann die Lagerung von den Strömungswegen umgangen werden muss. Andererseits ermöglicht die zentrale Anordnung eine Aufteilung von Zu- und/oder Ablaufkanal in einzelne Teilkanäle, die geometrisch gleichartig sind. Dadurch stellen sich nicht erst mit der zunehmenden Produktionsdauer gleichartige Strömungsverhältnisse durch die Selbstnivellierungseffekte ein, sondern bereits zu Beginn der Produktion. Eine dezentrale Anordnung von Zu- und Ablaufkanal erleichtert die Anordnung einer zentralen Achse oder Welle zur Lagerung des Siebrads. Dabei ist es dann vorteilhaft, wenn Zulaufteilkanäle und/oder die Ablaufteilkanäle durch entsprechende Anpassung von Kanallängen und Kanalquerschnitten gleichartige Strömungswiderstände aufweisen.

Insbesondere kann vorgesehen sein, neben den konstruktiv vorgegeben Parametern bei der Fließkanalgeometrie bei den Zulaufteilkanälen und/oder bei den Ablaufteilkanälen auch noch die Umgebungstemperatur längs des jeweiligen Teilkanals durch Temperierelemente veränderbar zu machen und dann Länge, Querschnitt und Umgebungstemperatur der Teilkanäle derart aufeinander abzustimmen, dass sich gleichartige Volumenströme in jedem Teilkanal ergeben, sofern identische Strömungswiderstände an den Siebstellen bestehen.

Vorzugsweise erfolgt eine Verzweigung des Zulaufkanals und des Ablaufkanals in eine Vielzahl von Zulauf- bzw. Ablaufteilkanälen. Dadurch wird der Fluidstrom an dem in Fließrichtung vorderen Gehäuseelement auf eine Mehrzahl von Siebstellen verteilt und an der Gehäuserückseite wieder vereinigt. Dabei befinden sich in allen in Bezug auf die Gehäuseelemente möglichen Winkelstellungen des Siebrads ständig bis zu 90% der Sieböffnungen in Deckung mit den Zulauf- bzw. Ablaufteilkanälen und sind durchströmbar. Lediglich mindestens eine Siebstelle wird im Produktionsbetrieb nicht gespeist, so dass dort, an einer im Gehäuse vorgesehenen Siebwechselposition, das Siebelement entnommen werden kann und der Durchbruch im Siebrad insgesamt gereinigt werden kann.

Zugleich wird dadurch, dass sich möglichst viele Siebstellen ständig im Produktionsbetrieb befinden, die Gefahr von längeren Verweilzeiten des Materials und damit die Gefahr von Materialzersetzungen gemindert. Eine noch mit Fluid gefüllte Siebstelle wird höchstens während des Drehens des Siebrads um einen Winkelschritt nicht durchströmt. Diese Zeit ist aber so kurz, dass die Gefahr von Materialzersetzungen ausgeschlossen ist.

Die Verzweigung des Zulaufkanals in mehrere Zulaufteilkanäle kann sternförmig erfolgen, so dass jeweils von einem zentralen Zulaufkanal ein Zulaufteilkanal radial nach außen bis an die jeweilige Siebstelle führt.

Weiterhin möglich ist, dass ein Verteilerkanal vorgesehen ist, der in der Ringzone angeordnet ist oder der die Ringzone durchquert und der mit mehreren Siebpositionen verbunden ist und der mehrere Siebstellen gleichzeitig speisen kann. Dieser Verteilerkanal wird beispielsweise von einem oder beiden seiner Enden aus gespeist oder aus der Mitte heraus. Von Siebstelle zu Siebstelle führen also Teilkanäle, die sich kettenförmig aneinander reihen.

Weiterhin sind Mischformen möglich, bei denen zwar von einem zentralen Zulaufkanal sternförmig Zulaufteilkanäle abgehen, wobei diese aber nicht jeweils nur mit einer einzelnen Siebstelle in Verbindung stehen, sondern auf dem Teilkreis der Siebstellen noch einmal zu einem oder mehreren bogenförmigen Verteilerkanälen vereinigt sind. Dadurch, dass ein Schmelzefluss dann nicht nur zentral von dem Zulaufkanal zu den Siebstellen hin möglich ist, sondern auch noch entlang des Teilkreises von einer Siebstelle zur nächsten, wird eine optimale Durchmischung erreicht und damit der Gefahr von Materialzersetzungen besonders effektiv vorgebeugt.

Auf der Gehäuserückseite sind die vorstehend geschilderten Verzweigungen im Stern wie auch in den Verteilerkanälen auf dem Teilkreis ebenso möglich, um die an den einzelnen Siebstellen durchgeführte Schmelze wieder zu vereinigen. Dabei muss nicht notwendigerweise dasjenige Verzweigungsprinzip bzw. Verteilerprinzip auf der Gehäuserückseite gewählt sein, welches auf der Gehäusevorderseite vorliegt. Auch hierbei sind Mischformen möglich, um die bestmögliche Durchströmung für den jeweiligen Anwendungszweck zu erreichen.

Vorzugsweise führt im Gehäuse jeweils wenigstens ein Zulauf- und ein Ablaufteilkanal zu einer Teilmenge von möglichen Siebpositionen und zwar zu einer Anzahl
- entsprechend dem mindestens 0,5fachen der Gesamtzahl ***n*** an möglichen Siebpositionen und
- bis höchstens zu ***n*-*1*** Siebpositionen.

An einer ***n-ten*** Position ist dann eine Siebwechselöffnung in wenigstens einem der Gehäuseelemente vorgesehen.

Bei einem sehr kleinen Siebrad mit ***n*** = 4 Siebpositionen etwa gibt es genau eine Siebwechselposition. Die anderen drei Siebpositionen, entsprechend 75% der am Siebrad gebildeten Siebstellen, sind vorzugsweise gleichzeitig in Produktionsstellung.

Die Vorteile der Erfindung ergeben sich jedoch gerade bei größeren Siebrädern mit möglichst vielen Siebstellen. Anders als im Stand der Technik, wo nur eine Siebstelle in Produktion ist und die anderen ungenutzt verweilen oder gespült bzw. gereinigt werden und eine größere Bauweise eher Nachteile wegen einer längeren Verweilzeit nach sich zieht, ist erfindungsgemäß der erzielbare Durchsatz umso höher, je mehr Siebstellen vorhanden sind.

Vorzugsweise ist ***n*** = 12 und die Öffnungen der Ablauf- und Zulaufteilkanäle sowie der Siebpositionen sind auf dem Siebrad wie die Ziffern einer Uhr auf einem gemeinsamen Teilkreis angeordnet. Diese Verteilung der Siebstellen in 12 x 30°-Schritten ist einfach zu fertigen und nutzt den zur Verfügung stehenden Platz in einem ringförmigen Bereich auf einem Siebrad mit einem gut handhabbaren Durchmesser von 400mm bis 2000 mm, bei einem Durchmesser der Siebstellen von jeweils 100 mm bis zu 200mm, optimal aus.

Die Zulauf- und/oder die Ablaufteilkanäle weiten sich vorzugsweise an der zum Siebrad gewandten Oberfläche der Gehäuseelemente trichterförmig auf, damit die eigentlichen Fließkanäle schlank bleiben und nur deren Mündungen so groß sind, dass die mit größerem Querschnitt ausgebildeten Sieböffnungen im Siebrad vollständig durchströmt werden können.

Eine besonders vorteilhafte Ausführungsform sieht vor, die jeweils übernächsten Positionen beidseits der Siebwechselposition zumindest im hinteren Gehäuseelement langgestreckt, insbesondere langlochförmig, auszubilden. Dadurch wird erreicht, dass die Siebstellen länger als an den übrigen Positionen durchströmt werden können und zwar so lange, bis sie nahezu schon die Siebwechselstelle erreicht haben. Erst kurz davor reißt der Schmelzstrom dann ab, wobei sich aber zur Reinseite hin auch noch der Druck in der Siebkavität abbauen kann, so dass ein Schmelzeaustritt an der Siebwechselöffnung vermieden wird.

"Langgestreckt" im Sinne der vorliegenden Erfindung bezeichnet alle länglich ausgedehnten Konturen, die über eine Kreisform hinausgehen und sich damit weiter entlang der Ringzone erstrecken. Das schließt Langlochformen im herkömmlichen Sinne ebenso ein wie Ellipsen oder auch unsymmetrische Formen.

Statt die Öffnung auf der Ablaufseite länglich ausgedehnt vorzusehen, kann sich auch seitlich ein Stichkanal an den Öffnungsquerschnitt des Ablaufteilkanals anschließen.

An der in Drehrichtung des Siebrades übernächsten Position hinter der Siebwechselposition ist bevorzugt ebenfalls ein Langloch vorgesehen, so dass an der nächsten auf die Siebwechselposition folgenden Stelle die Siebkavität bereits wieder von der Reinsiebseite her mit Schmelze beaufschlagt werden kann, wenn sie gerade erst die Siebwechselposition verlassen hat.

Um die gerade gereinigte Sieböffnung im Siebrad wieder zu befüllen und zu entlüften, ist vorzugsweise vorgesehen, dass wenigstens eine der Siebpositionen als eine Entlüftungsposition ausgebildet ist, wobei in dem hinteren Gehäuseteil wenigstens ein Ablaufteilkanal zu der Reinseite der Entlüftungsposition führt und wobei sich von der Schmutzseite von der Entlüftungsposition aus eine Entlüftungsöffnung zur Außenseite des Gehäuses erstreckt.

Um mit einem von der Reinsiebseite her beaufschlagbaren Schmelzedruck Anhaftungen am Sieb auf der Schmutzseite lösen zu können, kann weiterhin vorgesehen sein, dass wenigstens eine der Siebpositionen als eine Rückspülsiebposition ausgebildet ist, wobei in dem hinteren Gehäuseteil wenigstens ein Ablaufteilkanal zu der Reinseite der Rückspülsiebposition führt und wobei sich von der Schmutzseite der Rückspülsiebposition aus eine Rückspülöffnung zur Außenseite des Gehäuses erstreckt.

Konstruktiv gesehen können die Entlüftungsposition und die Rückspülposition gleichartig ausgebildet werden. Eine Vorflutung einer leeren Sieböffnung und eine Entlüftung können sowohl von der Schmutz- wie von der Reinsiebseite her bewirkt werden. Lediglich muss ein zum Entweichen der Luft vorzusehender Entlüftungskanal so angeordnet sein, dass er sich bevorzugt oben an die Sieböffnung anschließt.

Beim Rückspülen ist die Position der Mündung des Rückspülkanals hingegen nicht wesentlich, wohl aber die Fließrichtung von der Reinsiebseite zur Schmutzseite.

Bringt man diese Anforderungen auf einen gemeinsamen Nenner, so ergibt sich eine vereinigte Entlüftungs- und Rückspülposition, an welcher Schmelze von hinten - also von der Reinseite her - in die Sieböffnung eingeleitet wird, und an der Schmelze und/oder Luft über eine im oberen Bereich der Kavität mündende Rückspül- und Entlüftungsöffnung wieder entweichen kann.

*I*n der Nachbarschaft der im Gehäuse vorgesehenen Siebwechselposition ist es erforderlich, einen so großen Abstand zu der nächsten durchströmbaren Siebstelle zu halten, dass unabhängig von der jeweiligen Winkelstellung des Siebrades sichergestellt ist, dass keine Schmelze aus einer Siebstelle in die Siebwechselöffnung fließen kann, weder von der Schmutz- noch von der Reinseite. Dazu kann beispielsweise der Teilkreisdurchmesser erhöht bzw. der Siebstellendurchmesser reduziert werden, so dass sich von Siebstelle zu Siebstelle ein vergrößerter Abstand auf dem Teilkreis ergibt.

Um die auf dem Siebrad zur Verfügung stehende Fläche jedoch optimal ausnutzen zu können, ist es besser, die Siebstellen dichter aneinander zu packen, und stattdessen die Positionen in direkter Nachbarschaft der Siebwechselstelle frei zu lassen. Dies bedeutet, dass bei insgesamt drei Positionen, die bei einer gleichmäßigen Verteilung auf den Teilkreis anzuströmen wären, keine Verbindungskanäle existieren sollten. Diese drei Positionen sind eben die Siebwechselstelle selbst sowie die Position unmittelbar darüber und darunter.

Umfasst etwa das Siebrad zwölf Siebstellen entsprechend den Stundenmarkierungen auf einem Ziffernblatt einer Uhr, dann kann die Siebwechselstelle beispielsweise auf der 3-Uhr-Position angeordnet sein. Die 2-Uhr-Position als Sperrposition und die 4-Uhr-Position als Entlüftungsposition bleiben dann in den jeweiligen Gehäuseelementen frei von Schmelzkanälen, so dass die jeweiligen Siebstellen im Siebrad dort nicht angeströmt werden. Dadurch wird sichergestellt, dass keine Schmelze aus der Nachbarschaft in die Siebwechselöffnung gelangt, auch wenn die Siebstellen eng nebeneinander angeordnet sind.

Zusammengefasst bedeutet dies, dass bei einer bevorzugten Ausführungsform die Anordnung und Nutzung der Siebpositionen wie folgt ist:
- Im Gehäuse führt jeweils wenigstens ein Zulauf- und ein Ablaufteilkanal zu einer Anzahl von höchstens ***n*-*3*** Siebpositionen von n möglichen Positionen, welche sich bei gleichmäßiger Verteilung auf einem Teilkreis ergeben.
- An einer ***m-ten*** Siebposition ist eine Siebwechselöffnung in wenigstens einem der Gehäuseelemente vorgesehen, wobei ***m*** < ***n*.**
- An einer ***(m+1)-ten*** Siebposition ist eine Rückspülsiebposition vorgesehen ist.
- An einer ***(m-1)-ten*** Siebposition ist eine Sperrstellung vorgesehen ist, um die Sieböffnung drucklos zu machen, bevor sie in die Siebwechselöffnung eintritt.
- An einer ***(m+2)-ten*** Siebposition und an einer ***(m-2)-ten*** Siebposition sind jeweils langlochförmige Ablaufteilkanäle vorgesehen.

Um das Siebrad zwischen den Gehäuseelementen zu lagern, können Rollen vorgesehen sein, wobei die Rollenanordnung den Außenumfang des Siebrades umschließt.

Weiterhin kann vorgesehen sein, eine zentrale Welle am Siebrad anzubringen, die in einer Nabe im Gehäuse drehbar gelagert ist. Schließlich kann vorgesehen sein, eine kreisförmige Ausnehmung im Zentrum des Siebrades vorzusehen und an wenigstens einem der Gehäuseelemente einen entsprechenden Absatz bzw. Zapfen auszubilden, auf dem das Siebrad dann in einer Lagerausnehmung im Gehäuse gelagert ist.

Die Erfindung wird nachfolgend anhand eines Ausführungsbeispiels und mit Bezug auf die Zeichnung näher erläutert, wobei die Filtration von Kunststoffschmelze beispielhaft beschrieben wird. Die Figuren zeigen:
- Fig. 1: einen Schmutzabscheider gemäß einer ersten Ausführungsform in Ansicht von vorn;
- Fig. 2a - 2d: einen Schmutzabscheider in schematischer Ansicht von vorn, jeweils in verschiedenen Stellungen des Siebrads;
- Fig. 3: ein vorderes Gehäuseelement in schematischer Ansicht von hinten;
- Fig. 4: eine alternative Ausführungsform eines vorderen Gehäuseelements in schematischer perspektivischer Ansicht;
- Fig. 5: das Gehäuseelement der Ausführungsform nach Fig. 4 in Ansicht von vorn; und
- Fig. 6: eine teilweise Abwicklung eines Fließkanals bei der Ausführungsform gemäß den Figuren 4 und 5.

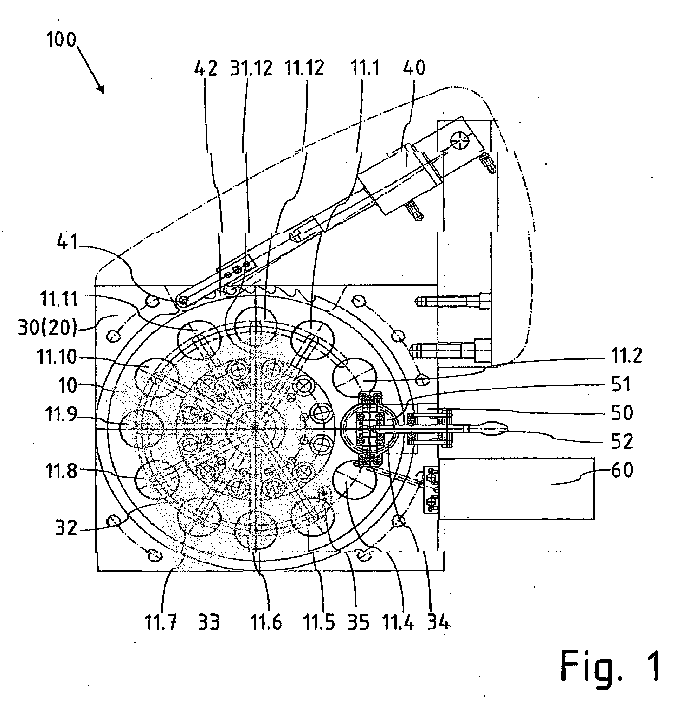

Fig. 1 zeigt einen vollständigen Schmutzabscheider 100 mit einem Blick von vorn - in Strömungsrichtung gesehen - auf ein Gehäuse, das ein vorderes Gehäuseelement 30 und ein hinteres Gehäuseelement 20 umfasst. Die Gehäuseelemente 20, 30 sind mit Abstand zueinander angeordnet und schließen zwischen sich ein drehbares Siebrad 10 mit einer Vielzahl von Siebstellen 11.1 ... 11.12 ein.

Am Gehäuse angebaut ist eine Antriebseinheit 40, die in diesem Fall einen Pneumatikzylinder umfasst, der schwenkbeweglich gelagert ist und der an seinem Ende ein Mitnehmerelement 41 aufweist, welches in die am Außenumfang des Siebrades 10 gebildete Verzahnung 42 eingreift. Aufgrund des Eigengewichts der Antriebseinheit 40 ruht das Mitnehmerelement 41 immer auf der Verzahnung 42. Mit einer leichten Vorschubbewegung gerät es über die Flanke des nächstfolgenden Zahns und sackt dahinter ab, so dass es bei der nächstfolgenden Rückzugsbewegung des Mitnehmerelementes das Siebrad 10 um einen bestimmten Winkel in Uhrzeigerrichtung gesehen verdreht. Diese Ausbildung des Antriebs, die an sich bekannt ist, stellt eine besonders einfache und effektive Umsetzung eines Schrittschaltbetriebes dar.

Am vorderen Gehäuseelement 30 ist im Bereich einer Siebwechselöffnung eine Verschlusseinrichtung 50 mit einer Siebwechselklappe 51 angeordnet, die über ein Hebelelement 52 gegenüber dem Gehäuse verriegelbar ist und die nachfolgend noch näher erläutert wird.

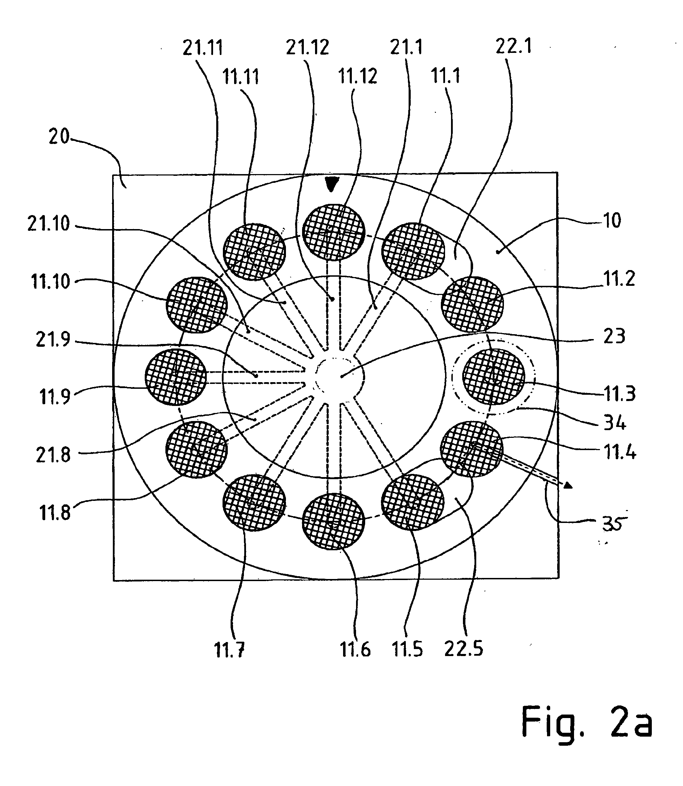

Unterhalb davon, an der rechten Gehäusekante, ist eine Absperreinheit 60 angeordnet, mit welcher eine Auslassöffnung eines Rückspül- und Entlüftungskanals 35 (vgl. Fig. 2a-2d) verschließbar ist.

Fig. 2a zeigt einen Blick auf den Schmutzabscheider 100 mit abgenommenem vorderen Gehäuseelement, also mit Blick direkt auf das Siebrad 10 und das dahinter liegende hintere Gehäuseelement 20.

Im dargestellten Ausführungsbeispiel weist das Siebrad 10 zwölf Siebstellen 11.1 ... 11.12 auf, die wie die Ziffern auf einem Ziffernblatt angeordnet sind. Die Siebstellen 11.1 ... 11.12 sind in diesem Beispiel als kreisrunde Durchbrechungen im scheibenförmigen Siebrad 10 ausgeführt, welche jeweils mit drahtgitterförmigen Siebelementen versehen sind.

In dem hinteren Gehäuseelement 20 führt speichenförmig von jeder Siebstelle 11.1 ... 11.12 aus ein Ablaufteilkanal 21.1 ... 21.12 zu einem zentralen Ablaufkanal 23 im Gehäuse 20.

In den Figuren 2a bis 2d ist jeweils am Siebrad 10 oberhalb einer Siebstelle 11.12 eine dreieckige Markierung angebracht, um die fortschreitende Drehbewegung in der Abfolge der Figuren zu veranschaulichen.

Bei der Darstellung nach Fig. 2a nicht sichtbar sind die meisten trichterförmigen Mündungen der jeweiligen Ablaufteilkanäle in dem hinteren Gehäuseelement 20, da diese in der in Fig. 2a gezeigten Stellung des Siebrades 10 von den Siebstellen überdeckt sind. Lediglich an der 1-Uhr-Position und der 5-Uhr-Position sind die langlochförmigen Mündungen 22.1, 22.5 der Ablaufteilkanäle 21.1 und 21.5 sichtbar.

Die Siebstelle 11.1 liegt in Fig. 2a mit dem linken Teil der Mündung 22.1 in Überdeckung. Der Teil rechts daneben liegt teilweise offen, überlappt aber noch ein wenig mit der nächstfolgenden Siebstelle 11.2 auf der 2-Uhr-Position.

Wird nun an dem nicht dargestellten vorderen Gehäuseelement auf der 2-Uhr-Position die Schmelze durch die Siebstelle 11.2 geleitet, so kann diese über die Mündung 22.1 des Ablaufteilkanal 21.1 abfließen; Entsprechendes gilt für die anderen Siebstellen 11.2 ... 11.12 und Ablaufteilkanäle 21.2 ... 21.12.

Die mit 34 bezeichnete strichpunktierte Linie an der 3-Uhr-Position kennzeichnet eine im Gehäusevorderteil 30 vorhandene Siebwechselöffnung 34. In der Stellung gemäß Fig. 2a des Siebrades 10 liegt die Siebstelle 11.3 genau an der 3-Uhr-Position und damit innerhalb der Siebwechselöffnung 34.

In dem hinteren Gehäuseelement 20 besteht an dieser Position keinerlei Verbindung mit einem der Ablaufteilkanäle 21.1 ... 21.12. Auch auf dem vorderen Gehäuseelement 30 besteht keine Verbindung mit einem der Zulaufteilkanäle. Die an der 3-Uhr-Position befindliche Siebstelle 11.3 ist somit drucklos, wenn sie sich innerhalb der Siebwechselöffnung 34 befindet, und ist damit problemlos für Wartungsarbeiten zugängig.

Die wiederum nächstfolgende Siebstelle 11.4 steht bei der Stellung des Siebrads 10 gemäß Figur 2a auf der Reinsiebseite in teilweiser Überdeckung mit der langlochförmig erweiterten Mündung des Ablaufteilkanals 22.5 und zugleich mit einem Rückspül- und Entlüftungskanal 35, welcher auf der Schmutzseite, also in dem vorderen Gehäuseelement 30, angeordnet ist und welcher zur Außenseite des Gehäuses führt. Das Medium, wie beispielsweise Kunststoffschmelze, kann über den Überlappungsbereich der Siebstelle 11.4 mit der Mündung 22.5 des Ablaufteilkanals 21.5 an der Reinseite durch die Siebstelle 11.4 hindurch fließen und kann von dort über den Kanal 35 zur Gehäuseaußenseite abfließen, wodurch auf der Schmutzseite vorhanden Ablagerungen weggespült werden können.

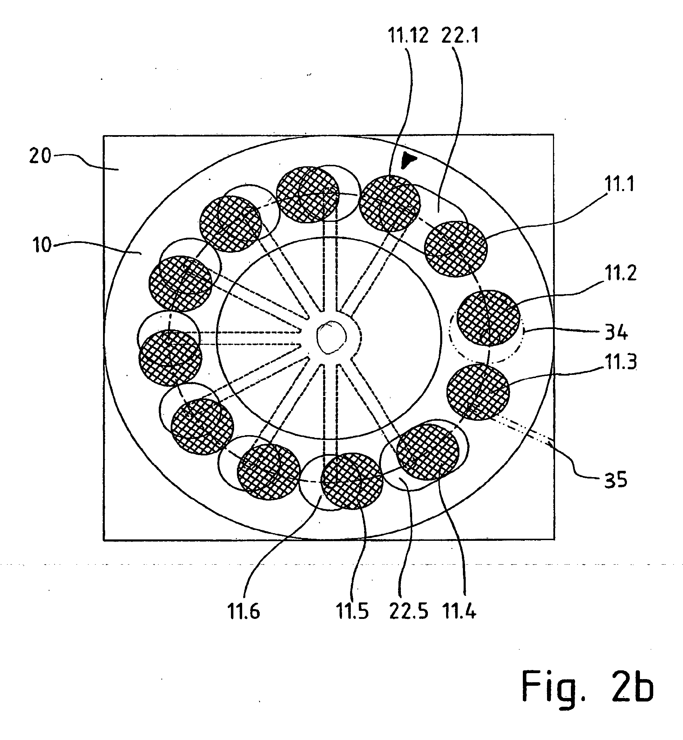

Fig. 2b zeigt eine Stellung des Siebrades 10, die um wenige Winkelgrade gegenüber der Stellung gemäß Fig. 2a verändert ist. Die Siebstelle 11.3 ist nun aus der Siebwechselöffnung 34 herausgetreten und steht bereits mit dem Rückspül- und Entlüftungskanal 35 in Verbindung. Zugleich befindet sich die Siebstelle 11.4 in dem Bereich der langlochförmigen Mündung 22.5 und wird dort bereits wieder durchströmt.

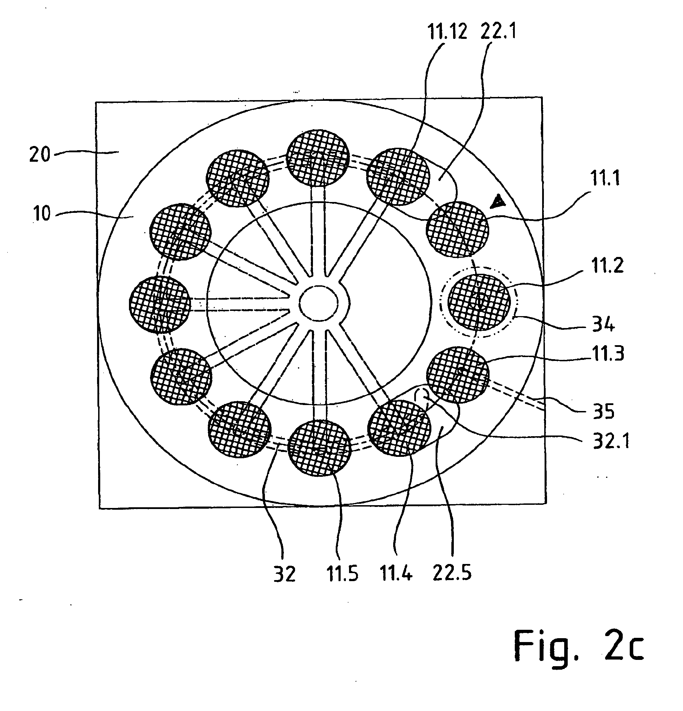

In Fig. 2c ist das Siebrad gegenüber der Stellung aus Figur 2a um einen vollen Winkelschritt gedreht, also um 30° bei der Anordnung von zwölf Siebstellen 11.1 ... 11.12. Die Siebstelle 11.3 befindet sich nun in derjenigen Position bei "3 Uhr", an der zuvor in Figur 2a die Siebstelle 11.4 war, nämlich mit teilweiser Überdeckung sowohl mit der langlochförmigen Mündung 22.5 wie auch mit dem Rückspül- und Entlüftungskanal 35, so dass nun die Rückspülung der Siebstelle 11.3 erfolgen kann. Es besteht jedoch noch keine Überdeckung mit einem fingerförmigen, gekrümmten Fortsatz 32.1 des Schmelzezulaufkanals 32 im vorderen Gehäuseelement 30.

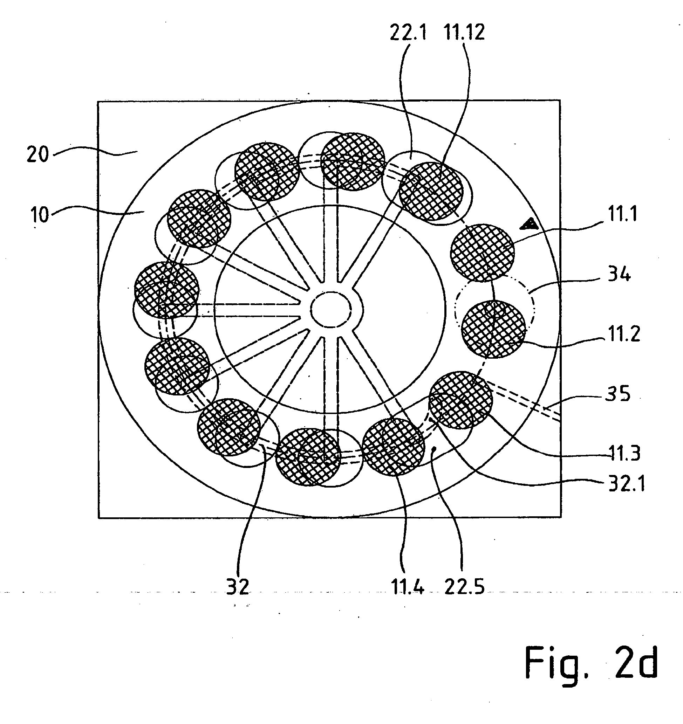

Bei der Stellung gemäß Figur 2d ist die Siebstelle 11.3 in Überdeckung mit dem Fortsatz 32.1 geraten. Die Siebstelle 11.3 kann darüber nun auch an der Schmutzseite des Siebes mit Schmelze geflutet werden; der hintere Bereich auf der Reinseite der Siebstelle ist ja bereits durch den vorangegangenen Rückspülvorgang geflutet worden. Noch in der Siebstelle 11.3 verbliebene Luft kann über den Kanal 35 entweichen.

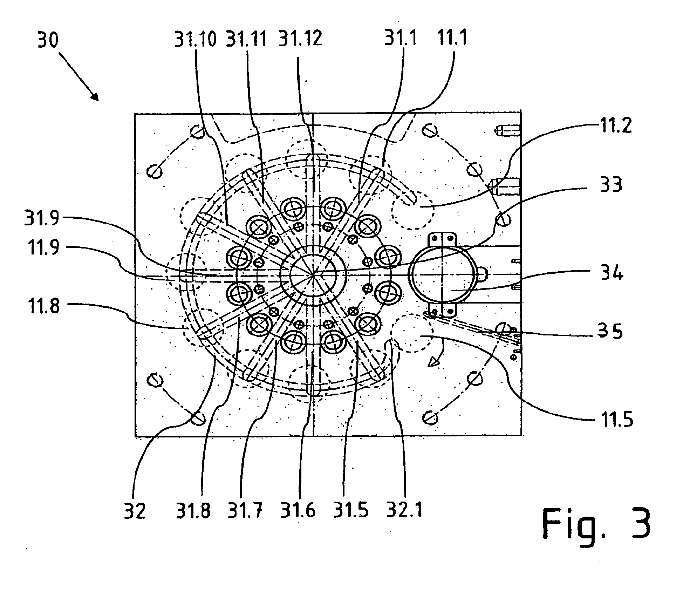

Fig. 3 zeigt einen Blick in Strömungsrichtung gesehen auf das Gehäusevorderteil mit seinem zentralen Zulaufkanal 33, der sich in eine Vielzahl von Zulaufteilkanälen 31.1 ... 31.12 sternförmig verzweigt. Die sternförmig angeordneten Zulaufteilkanäle 31.1 ... 31.12 wiederum vereinigen sich auf einem bogenförmigen Verteilerkanal 32. Dieser erstreckt sich beginnend bei einer Position zwischen 2 Uhr und 3 Uhr über einen Bogen von fast 270° gegen den Uhrzeigersinn bis auf eine Endposition zwischen "4 Uhr" und "5 Uhr".

Das Ende des bogenförmigen Verteilerkanals 35 im Bereich des Zulaufteilkanals 31.5 verläuft nicht mehr auf dem Teilkreis, sondern geht mit einer stärkeren Krümmung als Fortsatz 32.1 in Richtung des Zentrums. Diese besondere endseitige Ausbildung des Verteilerkanals 32 hat den Zweck, bei einer engen Anordnung mit möglichst vielen Siebstellen auf dem Siebrad 10, also mit wenig Abstand zueinander, dennoch eine Trennung zwischen den Funktionen "Rückspülen" gemäß Figur 2c und "Belüften" gemäß Figur 2a und 2d zu ermöglichen, und damit für beide Funktionen zusammen nur eine mögliche Siebposition auf dem Teilkreis besetzen zu müssen.

Mit der für die Entnahme oder Reinigung notwendigen Siebwechselposition sowie der Rückspül- und/oder Entlüftungsposition können also nur zwei der möglichen Positionen gar nicht mehr für die Filtration im Produktionsbetrieb genutzt werden. Die "2-Uhr"-Position ermöglicht noch eine Durchströmung mit eingeschränktem Querschnitt. Erst kurz vor Erreichen der "3-Uhr"-Position wird die Zufuhr des Mediums unterbrochen, um die Siebstelle drucklos zu machen. An allen anderen Positionen hingegen können die Siebstellen uneingeschränkt ständig durchströmt werden, so dass bei dem hier gezeigten Ausführungsbeispiel von zwölf möglichen Positionen eben nur zwei gar nicht zur Filtration nutzbar sind. Der Verfügbarkeitsgrad der Siebstellen für Filtrationszwecke beträgt daher mehr als 80%.

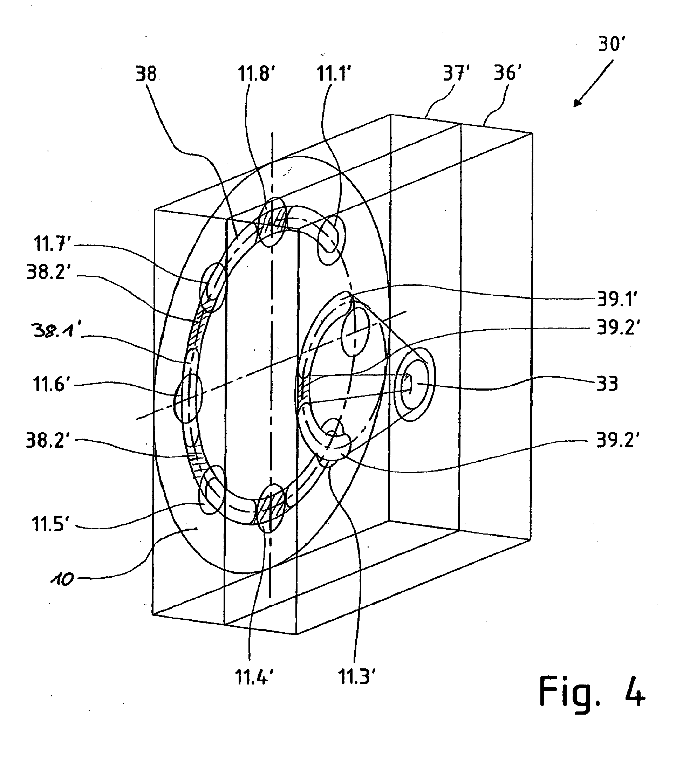

In den Figuren 4 bis 6 ist eine weitere Ausführungsform eines Schmutzabscheiders 100' dargestellt, bei dem aus zeichnerischen Gründen nur acht Siebstellen 11.1' ... 11.8' am Siebrad 10' vorgesehen sind.

Figur 4 zeigt in einer schematisierten perspektivischen Ansicht ein vorderes Gehäuseelement 30', das aus fertigungstechnischen Gründen aus zwei Teilplatten 36', 37' gebildet ist. Rechts in Figur 4 liegt die äußere Gehäusefläche mit einem zentralen Zulaufkanal 33. Links liegt die hintere Gehäusefläche, an der die Zulaufteilkanäle münden und an der das Siebrad 10' anliegt. Die Durchflussrichtung in Figur 4 ist also von rechts nach links.

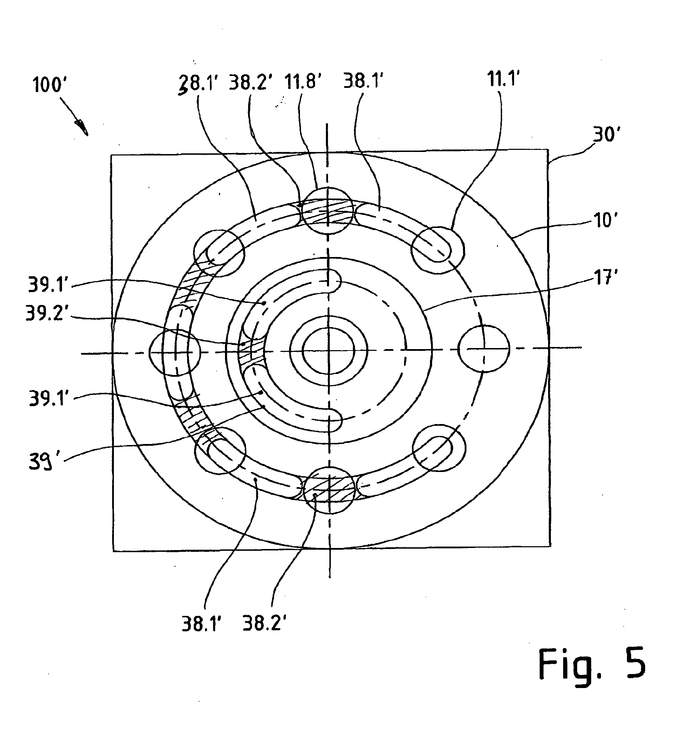

An der hinteren Gehäusefläche ist, wie auch Figur 5 zeigt, ein bogenförmiger Verteilerkanal 38' vorgesehen, der sich von einer Winkelposition bei 45° über einen Bogen von etwa 270° bis zu einer Winkelposition bei 315° erstreckt. Der Verteilerkanal 38' besitzt direkt an der hinteren Gehäusefläche keine Durchbrechungen, so dass sich ein durchgängiger, bogenförmiger Verteilerkanal ergibt, der alle davor liegenden Siebstellen am Siebrad gleichmäßig versorgen kann.

Etwas versetzt ins Innere der Teilplatte 37' hinein sind alternierend vollständig offene Fließkanalabschnitte 38.1' und Stege 38.2' aus Vollmaterial vorgesehen. Die offenen Fließkanalabschnitte 38.1' führen durch die Teilplatte 37' zur Trennebene zwischen den Teilplatten 36', 37' und dienen der Zuleitung des Mediums. Die Stege 38.2' dienen dazu, die Materialbereiche innerhalb des bogenförmigen Verteilerkanals 38' an den außen liegenden Materialbereichen abzustützen und insgesamt eine hohe Steifigkeit des Gehäuses zu erreichen.

In der Trennebene zwischen den Teilplatten 36', 37' ist ein weiterer bogenförmiger Verteilerkanal 39' vorgesehen, der sich nur über etwa 180° erstreckt und dessen Radius deutlich kleiner ist als der Radius des Verteilerkanals 38'. Die offenen Fließkanalabschnitte 38.1' des Verteilerkanals 38' münden in den offenen Fließkanalabschnitten 39.1' des Verteilerkanals 39'; die offenen Fließkanalabschnitte 39.1' des Verteilerkanals 39' wiederum münden in der zentralen Zulauföffnung 33'. Dazwischen bleibt wiederum ein Steg 39.2' als Abstützung bestehen.

Die Stege 38.2', 39.2' dienen auch als Strömungsteiler innerhalb der offenen Fließkanalabschnitte 38.1', 39.1', wie die in Fig. 7 dargestellte Abwicklung eines Fließkanals zeigt.

Mit der in den Figuren 4 bis 6 dargestellten Ausbildung des Inneren des vorderen Gehäuseelements 30' werden zwei Ziele erreicht:
Blickt man in die Draufsicht auf das vordere Gehäuseelement 30' in Figur 5, so erkennt man, dass sich innen, zwischen den Verteilerkanälen 38' und 39', ein ringförmiger Bereich ausbildet, der durch die Stege 38.2' ausreichend abgestützt ist, so dass es möglich ist, den inneren Bereich als eine Nabe 17 auszubilden und daran das Siebrad 10 drehbar zu lagern.

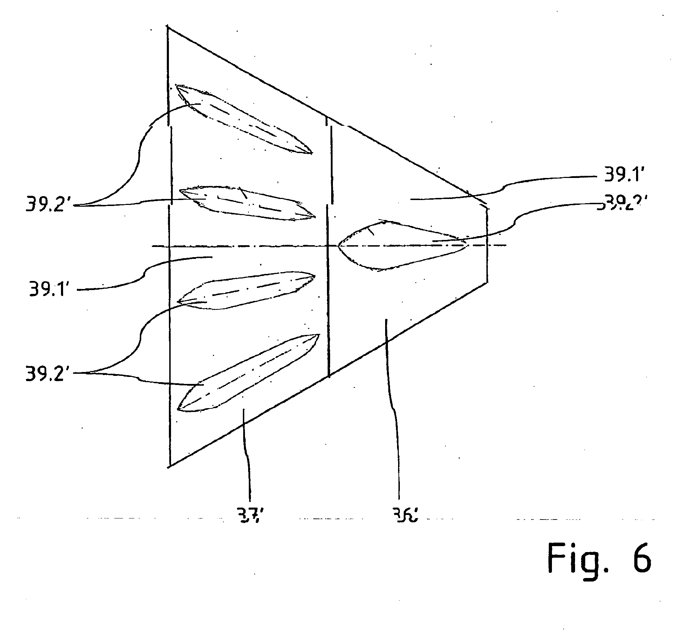

Zudem wird gerade aus Figur 6 deutlich, dass der Volumenanteil der hohlen Fließkanäle 38.1', 39.1' im Vergleich zu den Materialbereichen, die in Form der Stege 38.2', 39.2' übrig geblieben sind, hoch ist und dass zugleich die begrenzende Oberfläche der Fließkanalwandungen klein ist. Mit diesem Verhältnis von Wandoberfläche zu Fließkanalvolumen wird die Haftung eines zähen Mediums wie einer Kunststoffschmelze an den Wandoberflächen der Fließkanäle reduziert und es wird somit der Strömungswiderstand reduziert.

Nicht gezeichnet ist die Ausbildung eines hinteren Gehäuseelements, die analog zum vorderen Gehäuseelement 30' erfolgen sollte, damit auch dort eine Nabe zur Lagerung des Siebrads ausgebildet werden kann.

## Patentansprüche

1. Schmutzabscheider (100; 100') für hochviskose Medien,
mit einem Gehäuse mit einem vorderen Gehäuseelement (30; 30'), das wenigstens einen Zulaufkanal (33) aufweist, und einem hinteren Gehäuseelement (20), das wenigstens einen Ablaufkanal (23) aufweist, und
mit einem zwischen den Gehäuseelementen (20, 30; 30') drehbar gelagerten Siebrad (10; 10') mit einer Anzahl n von in einer Ringzone angeordneten Siebpositionen, an welchen jeweils wenigstens eine, mit wenigstens einem Siebeinsatzelement versehene Sieböffnung (11.1,..., 11.12) vorgesehen ist,
wobei der Zulaufkanal (33), der Ablaufkanal (23) und die Sieböffnung (11.1,..., 11.12) in wenigstens einer Arbeitsposition hintereinander liegen und einen Fließkanal ausbilden,
wobei in allen Stellungen des Siebrads (10; 10') ständig mehr als 50% der Sieböffnungen (11.1,...,11.12), welche von wenigstens einem Zulaufkanal (33) angeströmt werden und von welchen wenigstens ein Ablaufkanal wegführt, durchströmbar sind,
**dadurch gekennzeichnet,**
**dass** der Zulaufkanal im vorderen Gehäuseelement und-der Ablaufkanal im hinteren Gehäuseelement
in eine Vielzahl von Zulaufteilkanälen (31.1·₀₀ .,31.12) bzw. Ablaufteilkanälen (22.1,...,22.12) verzweigt sind und/oder
in eine Vielzahl von Zulaufteilkanälen (31.1,...,31.12) bzw. Ablaufteilkanälen (22.1,...,22.12) unterteilt sind,
**dass** mehrere Zulaufteilkanäle (31.1,...,31.12) bzw. Ablaufteilkanäle (22.1,...,22.12) sternförmig von dem Zulaufkanal (33) und/oder dem Ablaufkanal (23) ausgehen, und
**dass** eine sternförmige Verteileranordnung vorgesehen ist, die in wenigstens einem bogenförmigen Verteilerkanal (32; 38') mündet.

2. Schmutzabscheider nach Anspruch 1, **dadurch gekennzeichnet, dass** der Zulaufkanal (33) und/oder der Ablaufkanal zentral, im Bereich der Mittelachse des Siebrads (10; 10'), angeordnet sind.

3. Schmutzabscheider nach Anspruch 1, **dadurch gekennzeichnet, dass** der Zulaufkanal und/oder der Ablaufkanal dezentral, außerhalb des Bereich der Mittelachse des Siebrads, angeordnet sind.

4. Schmutzabscheider (100; 100') nach wenigstens einem der Ansprüche 1 bis 3, **dadurch gekennzeichnet, dass** eine Verzweigungsstelle des Zulaufkanals (33), von der die Zulaufteilkanäle (31.1 ... 31.12) ausgehen, und/oder eine Sammelstelle, an der sich die Ablaufteilkanäle (22.1,...,22.12) vereinigen, jeweils auf oder an der Rotationsachse des Siebrads (10; 10') angeordnet sind.

5. Schmutzabscheider nach wenigstens einem der Ansprüche 1 bis 4, **dadurch gekennzeichnet, dass** die Zulaufteilkanäle (31.1,...,31.12) und/oder die Ablaufteilkanäle (22.1,...,22.12) gleichartige Strömungswiderstände aufweisen, wobei:
- die Zulaufteilkanäle (31.1 ... 31.12) und/oder die Ablaufteilkanäle (22.1,...,22.12) gleich lang sind und einen gleichen Querschnitt aufweisen und/oder
- bei den Zulaufteilkanälen (31.1,...,31.12) und/oder bei den Ablaufteilkanälen (22.1,...,22.12) die Umgebungstemperatur längs des Teilkanals durch Temperierelemente veränderbar ist und Länge, Querschnitt und Umgebungstemperatur längs der Teilkanäle (22.1,...,22.12; 31.1,...,31.12) derart aufeinander abgestimmt sind, dass sich gleichartige Volumenströme ergeben.

6. Schmutzabscheider (100; 100') nach wenigstens einem der Ansprüche 1 bis 5, **dadurch gekennzeichnet, dass** mindestens ein Zulaufteilkanal (31.1,...,31.12) bzw. ein Ablaufteilkanal (22.1,...,22.12) in einem Verteilerkanal (32) mündet, der in der Ringzone angeordnet ist oder der die Ringzone durchquert und der mit mehreren Siebpositionen verbunden ist.

7. Schmutzabscheider (100; 100') nach Anspruch 6, **dadurch gekennzeichnet, dass** der Verteilerkanal (32) bogenförmig oder polygonzugförmig ist.

8. Schmutzabscheider (100; 100') nach wenigstens einem der Ansprüche 1 bis 6, **dadurch gekennzeichnet, dass** mehrere Zulaufteilkanäle (31.1,...,31.12) bzw. Ablaufteilkanäle (22.1,...,22.12) sternförmig von dem Zulaufkanal (33) und/oder dem Ablaufkanal (23) ausgehen.

9. Schmutzabscheider (100; 100') nach wenigstens einem der Ansprüche 1 bis 7, **dadurch gekennzeichnet, dass** eine sternförmige Verteileranordnung vorgesehen ist, die in wenigstens einem bogenförmigen Verteilerkanal (32; 38', 39') mündet.

10. Schmutzabscheider (100; 100') nach einem der vorhergehenden Ansprüche, **dadurch gekennzeichnet, dass** wenigstens eine der Siebpositionen als eine Rückspülsiebposition ausgebildet ist, wobei in dem hinteren Gehäuseteil (20) wenigstens ein Ablaufteilkanal (21.5) zu der Reinseite der Sieböffnung an der Rückspülsiebposition führt und wobei sich von der Schmutzseite der Rückspülsiebposition aus eine Auslassöffnung (35) zur Außenseite des Gehäuses erstreckt.

11. Schmutzabscheider (100; 100') nach wenigstens einem der Ansprüche 1 bis 10, **dadurch gekennzeichnet, dass** an wenigstens einer n-ten Siebposition eine Siebwechselöffnung (34) in wenigstens einem der Gehäuseelemente (20, 30; 30') vorgesehen ist.

12. Schmutzabscheider (100; 100') nach wenigstens einem der vorhergehenden Ansprüche, **dadurch gekennzeichnet, dass** wenigstens eine der Siebpositionen als eine Entlüftungsposition ausgebildet ist, wobei wenigstens ein Ablaufteilkanal (21.5) oder ein Zulaufteilkanal zu der Entlüftungsposition führt und wobei sich eine Auslassöffnung (35) zur Außenseite des Gehäuses erstreckt.

13. Schmutzabscheider (100; 100') nach Anspruch 10 und 11, **dadurch gekennzeichnet, dass** die Rückspülposition und die Entlüftungsposition an einer Position vereint sind und dass an der Position wenigstens eine Auslassöffnung (35) zum Entlüften und/oder Rückspülen vorgesehen ist.

14. Schmutzabscheider (100; 100') nach wenigstens einem der Ansprüche 10 bis 13, **dadurch gekennzeichnet, dass** der Rückspül- und Entlüftungskanal über eine Sperrschiebereinheit (60) verschließbar ist.

15. Schmutzabscheider (100; 100') nach wenigstens einem der vorhergehenden Ansprüche, **dadurch gekennzeichnet, dass** sich die Zulaufund/oder die Ablaufteilkanäle (22.1,...22.12) an ihrer zum Siebrad (10; 10') gewandten Seite trichterförmig erweitern.

16. Schmutzabscheider (100; 100') nach wenigstens einem der Ansprüche 1 bis 15, **dadurch gekennzeichnet, dass** ein zu der Siebwechselöffnung (34) und/oder zu der Rückspülsiebposition benachbarter Ablaufteilkanal (21.1, 21.5) in dem hinteren Gehäuseelement (20) in Richtung des Siebrads (10; 10') zu einem nicht kreisförmigen Verteiler (21.5, 21.5) erweitert ist oder dass sich an den Ablaufteilkanal (21.1, 21.5) ein Stichkanal anschließt.

17. Schmutzabscheider (100; 100') nach wenigstens einem der vorhergehenden Ansprüche, **dadurch gekennzeichnet, dass** die Siebpositionen (11.1,...,11.12) in einer gemeinsamen Ringzone alternierend auf zwei zueinander beabstandeten Teilkreisen angeordnet sind.

## Claims

1. Dirt separator (100; 100') for highly viscous media,
comprising a housing having a front housing element (30; 30'), which has at least one inflow channel (33), and a rear housing element (20), which has at least one outflow channel (23), and
comprising a screen wheel (10; 10') which is rotatably mounted between the housing elements (20, 30; 30') and has a number n of screen positions which are arranged in an annular zone and in which in each case at least one screen opening (11.1, ..., 11.12), which is provided with at least one screen insert element, is provided,
wherein the inflow channel (33), the outflow channel (23) and the screen opening (11.1, ..., 11.12) are situated one behind the other and form a flow channel in at least one working position,
wherein media can continuously flow through more than 50% of the screen openings (11.1, ..., 11.12), to which at least one inflow channel (33) flows and from which at least one outflow channel flows away, in all positions of the screen wheel (10; 10'),
**characterized**
**in that** the inflow channel in the front housing element and the outflow channel in the rear housing element
are branched into a large number of partial inflow channels (31.1•₀₀., 31.12) and, respectively, partial outflow channels (22.1, ..., 22.12) and/or
are subdivided into a large number of partial inflow channels (31.1, ..., 31.12) and, respectively, partial outflow channels (22.1, ..., 22.12),
**in that** a plurality of partial inflow channels (31.1, ..., 31.12) and, respectively, partial outflow channels (22.1, ..., 22.12) start, in the manner of a star, from the inflow channel (33) and/or from the outflow channel (23), and
**in that** a star-shaped distributor arrangement which issues into at least one arcuate distributor channel (32; 38') is provided.

2. Dirt separator according to Claim 1, **characterized in that** the inflow channel (33) and/or the outflow channel are/is arranged centrally, in the region of the centre axis of the screen wheel (10; 10').

3. Dirt separator according to Claim 1, **characterized in that** the inflow channel and/or the outflow channel are arranged decentrally, outside the region of the centre axis of the screen wheel.

4. Dirt separator (100; 100') according to at least one of Claims 1 to 3, **characterized in that** a branching point of the inflow channel (33), from which the partial inflow channels (31.1, ..., 31.12) start, and/or a collection point, at which the partial outflow channels (22.1, ..., 22.12) meet, are each arranged on or at the rotation axis of the screen wheel (10; 10').

5. Dirt separator according to at least one of Claims 1 to 4, **characterized in that** the partial inflow channels (31.1, ..., 31.12) and/or the partial outflow channels (22.1, ..., 22.12) have identical flow resistances, wherein:
- the partial inflow channels (31.1, ..., 31.12) and/or the partial outflow channels (22.1, ..., 22.12) are of equal length and have an identical cross section, and/or
- in the partial inflow channels (31.1, ..., 31.12) and/or in the partial outflow channels (22.1, ..., 22.12), the ambient temperature along the partial channel can be varied by temperature-control elements, and the length, cross section and ambient temperature along the partial channels (22.1, ..., 22.12; 31.1, ..., 31.12) can be matched to one another in such a way that identical volumetric flow rates are produced.

6. Dirt separator (100; 100') according to at least one of Claims 1 to 5, **characterized in that** at least one partial inflow channel (31.1, ..., 31.12) or one partial outflow channel (22.1, ..., 22.12) issues into a distributor channel (32) which is arranged in the annular zone or which traverses the annular zone and which is connected to a plurality of screen positions.

7. Dirt separator (100; 100') according to Claim 6, **characterized in that** the distributor channel (32) is arcuate or in the form of an open polygon.

8. Dirt separator (100; 100') according to at least one of Claims 1 to 6, **characterized in that** a plurality of partial inflow channels (31.1, ..., 31.12) or partial outflow channels (22.1, ..., 22.12) start, in the manner of a star, from the inflow channel (33) and/or from the outflow channel (23).

9. Dirt separator (100; 100') according to at least one of Claims 1 to 7, **characterized in that** a star-shaped distributor arrangement which issues into at least one arcuate distributor channel (32; 38', 39') is provided.

10. Dirt separator (100; 100') according to one of the preceding claims, **characterized in that** at least one of the screen positions is in the form of a backflush screen position, wherein, in the rear housing part (20), at least one partial outflow channel (21.5) leads to the clean side of the screen opening in the backflush screen position, and wherein an outlet opening (35) extends from the dirty side of the backflush screen position to the outside of the housing.

11. Dirt separator (100; 100') according to at least one of Claims 1 to 10, **characterized in that** a screen changing opening (34) is provided in at least one of the housing elements (20, 30; 30') in at least an nth screen position.

12. Dirt separator (100; 100') according to at least one of the preceding claims, **characterized in that** at least one of the screen positions is in the form of a venting position, wherein at least one partial outflow channel (21.5) or one partial inflow channel leads to the venting position, and wherein an outlet opening (35) extends to the outside of the housing.

13. Dirt separator (100; 100') according to Claim 10 or 11, **characterized in that** the backflush position and the venting position meet in one position, and **in that** at least one outlet opening (35) for venting and/or backflushing is provided in the position.

14. Dirt separator (100; 100') according to at least one of Claims 10 to 13, **characterized in that** the backflush and venting channel can be closed by means of a blocking slide unit (60).

15. Dirt separator (100; 100') according to at least one of the preceding claims, **characterized in that** the partial inflow channels and/or the partial outflow channels (22.1, ..., 22.12) widen in the manner of a funnel on their side which faces the screen wheel (10; 10').

16. Dirt separator (100; 100') according to at least one of Claims 1 to 15, **characterized in that** a partial outflow channel (21.1, 21.5) which is adjacent to the screen changing opening (34) and/or to the backflush screen position in the rear housing element (20) is widened in the direction of the screen wheel (10; 10') to form a non-circular distributor (21.5, 21.5), or **in that** a branch channel adjoins the partial outflow channel (21.1, 21.5).

17. Dirt separator (100; 100') according to at least one of the preceding claims, **characterized in that** the screen positions (11.1, ..., 11.12) are arranged in a common annular zone in an alternating manner on two partial circles which are spaced apart from one another.

## Revendications

1. Séparateur d'impuretés (100; 100') pour milieux très visqueux,
avec un boîtier avec un élément de boîtier antérieur (30; 30'), qui présente au moins un canal d'admission (33), et un élément de boîtier postérieur (20), qui présente au moins un canal d'évacuation (23), et
avec une roue à tamis (10; 10') montée de façon rotative entre les éléments de boîtier (20, 30; 30'), avec un nombre n de positions de tamis agencées dans une zone annulaire, auxquelles il est respectivement prévu au moins une ouverture de tamis (11.1, ..., 11.12) munie d'au moins un élément de garniture de tamis,
dans lequel le canal d'admission (33), le canal d'évacuation (23) et l'ouverture de tamis (11.1, ..., 11.12) sont situés l'un derrière l'autre dans au moins une position de travail et forment un canal d'écoulement,
dans lequel dans toutes les positions de la roue à tamis (10; 10'), en permanence plus de 50 % des ouvertures de tamis (11.1, ..., 11.12), qui sont alimentées par au moins un canal d'admission (33) et desquelles part au moins un canal d'évacuation, peuvent être traversées,
**caractérisé en ce que**
le canal d'admission dans l'élément de boîtier antérieur et le canal d'évacuation dans l'élément de boîtier postérieur
sont ramifiés en une multiplicité de canaux d'admission partiels (31.1•₀₀., 31.12) ou de canaux d'évacuation partiels (22.1, ..., 22.12), et/ou
sont subdivisés en une multiplicité de canaux d'admission partiels (31.1, ..., 31.12) ou de canaux d'évacuation partiels (22.1, ..., 22.12), plusieurs canaux d'admission partiels (31.1,..., 31.12) ou plusieurs canaux d'évacuation partiels (22.1, ..., 22.12) partent en forme d'étoile du canal d'admission (33) et/ou du canal d'évacuation (23), et
il est prévu un agencement de distributeur en forme d'étoile, qui débouche dans au moins un canal de distributeur en forme d'arc (32; 38').

2. Séparateur d'impuretés selon la revendication 1, **caractérisé en ce que** le canal d'admission (33) et/ou le canal d'évacuation sont disposés au centre, dans la région de l'axe central de la roue à tamis (10; 10').

3. Séparateur d'impuretés selon la revendication 1, **caractérisé en ce que** le canal d'admission et/ou le canal d'évacuation sont disposés hors du centre, à l'extérieur de la région de l'axe central de la roue à tamis.

4. Séparateur d'impuretés (100; 100') selon au moins une des revendications 1 à 3, **caractérisé en ce qu'**un point de ramification du canal d'admission (33), d'où partent les canaux d'admission partiels (31.1, ..., 31.12) et/ou un point de réunion, où les canaux d'évacuation partiels (22.1, ..., 22.12) se rejoignent, sont agencés respectivement sur ou à l'axe de rotation de la roue à tamis (10; 10').

5. Séparateur d'impuretés selon au moins une des revendications 1 à 4, **caractérisé en ce que** les canaux d'admission partiels (31.1, ..., 31.12) et/ou les canaux d'évacuation partiels (22.1, ..., 22.12) présentent des résistances à l'écoulement identiques, dans lequel
- les canaux d'admission partiels (31.1, ..., 31.12) et/ou les canaux d'évacuation partiels (22.1, ..., 22.12) sont de même longueur et présentent une même section transversale, et/ou
- dans les canaux d'admission partiels (31.1, ..., 31.12) et/ou dans les canaux d'évacuation partiels (22.1, ..., 22.12), la température ambiante le long du canal partiel peut varier et la longueur, la section transversale et la température ambiante le long des canaux partiels (22.1, ..., 22.12; 31.1, ..., 31.12) sont accordées les unes aux autres de telle manière qu'il en résulte des courants volumiques identiques.

6. Séparateur d'impuretés (100; 100') selon au moins une des revendications 1 à 5, **caractérisé en ce qu'**au moins un canal d'admission partiel (31.1, ..., 31.12) ou un canal d'évacuation partiel (22.1, ..., 22.12) débouche dans un canal distributeur (32), qui est agencé dans la zone annulaire ou qui traverse la zone annulaire et qui est relié à plusieurs positions de tamis.

7. Séparateur d'impuretés (100; 100') selon la revendication 6, **caractérisé en ce que** le canal distributeur (32) est tracé sous forme arquée ou polygonale.

8. Séparateur d'impuretés (100; 100') selon au moins une des revendications 1 à 6, **caractérisé en ce que** plusieurs canaux d'admission partiels (31.1, ..., 31.12) ou plusieurs canaux d'évacuation partiels (22.1, ..., 22.12) partent en forme d'étoile du canal d'admission (33) et/ou du canal d'évacuation (23).

9. Séparateur d'impuretés (100; 100') selon au moins une des revendications 1 à 7, **caractérisé en ce qu'**il est prévu un agencement de distributeur en forme d'étoile, qui débouche dans au moins un canal distributeur (32; 38', 39') en forme d'arc.

10. Séparateur d'impuretés (100; 100') selon l'une quelconque des revendications précédentes, **caractérisé en ce qu'**au moins une des positions de tamis est réalisée comme une position de tamis de régénération, dans lequel au moins un canal d'évacuation partiel (21.5) dans l'élément de boîtier postérieur (20) conduit vers le côté propre de l'ouverture de tamis à la position de tamis de régénération et dans lequel une ouverture de sortie (35) s'étend du côté encrassé de la position de tamis de régénération vers le côté extérieur du boîtier.

11. Séparateur d'impuretés (100; 100') selon au moins une des revendications 1 à 10, **caractérisé en ce qu'**il est prévu à au moins une n^{ième} position de tamis une ouverture de changement de tamis (34) dans au moins un des éléments de boîtier (20, 30; 30').

12. Séparateur d'impuretés (100; 100') selon au moins une des revendications précédentes, **caractérisé en ce qu'**au moins une des positions de tamis est réalisée comme une position d'aération, dans lequel au moins un canal d'évacuation partiel (21.5) ou un canal d'admission partiel conduit à la position d'aération et dans lequel une ouverture de sortie (35) s'étend jusqu'au côté extérieur du boîtier.

13. Séparateur d'impuretés (100; 100') selon une revendication 10 et 11, **caractérisé en ce que** la position de régénération et la position d'aération sont réunies à une position et **en ce qu'**il est prévu à la position au moins une ouverture de sortie (35) pour l'aération et/ou la régénération.

14. Séparateur d'impuretés (100; 100') selon au moins une des revendications 10 à 13, **caractérisé en ce que** le canal de régénération et d'aération peut être fermé par une unité de vanne de fermeture (60).

15. Séparateur d'impuretés (100; 100') selon au moins une des revendications précédentes, **caractérisé en ce que** les canaux d'admission partiels et/ou les canaux d'évacuation partiels (22.1, ..., 22.12) s'évasent en forme d'entonnoir sur leur côté tourné vers la roue à tamis (10; 10').

16. Séparateur d'impuretés (100; 100') selon au moins une des revendications 1 à 15, **caractérisé en ce qu'**un canal d'évacuation partiel (21.1, 21.5) proche de l'ouverture de changement de tamis (34) et/ou de la position de tamis de régénération est évasé dans l'élément de boîtier postérieur (20) en direction de la roue à tamis (10; 10') en un distributeur non circulaire (21.5, 21.5) ou **en ce qu'**un canal de liaison se raccorde au canal d'évacuation partiel (21.1, 21.5).

17. Séparateur d'impuretés (100; 100') selon au moins une des revendications précédentes, **caractérisé en ce que** les positions de tamis (11.1, ..., 11.12) sont disposées en alternance sur deux cercles partiels espacés l'un de l'autre dans une zone annulaire commune.
